Europäisches Patentamt

European Patent Office

Office européen des brevets

(19)

(11) Veröffentlichungsnummer: **0 419 862 B1**

(12) **EUROPÄISCHE PATENTSCHRIFT**

(45) Veröffentlichungstag der Patentschrift: **15.02.95**

(51) Int. Cl.[6]: **C08L 67/07**, C08J 5/18

(21) Anmeldenummer: **90116364.2**

(22) Anmeldetag: **27.08.90**

Die Akte enthält technische Angaben, die nach dem Eingang der Anmeldung eingereicht wurden und die nicht in dieser Patentschrift enthalten sind.

(54) **Strahlenvernetzte Folienbahn, deren Verwendung und Verfahren zu deren Herstellung.**

(30) Priorität: **24.09.89 DE 3931890**

(43) Veröffentlichungstag der Anmeldung:
**03.04.91 Patentblatt 91/14**

(45) Bekanntmachung des Hinweises auf die
Patenterteilung:
**15.02.95 Patentblatt 95/07**

(84) Benannte Vertragsstaaten:
**AT BE CH DE FR GB IT LI NL**

(56) Entgegenhaltungen:
**EP-A- 0 207 257**
**EP-A- 0 305 161**

(73) Patentinhaber: **HÜLS AKTIENGESELLSCHAFT**

**D-45764 Marl (DE)**

(72) Erfinder: **Smith, Hylton H.**
**1616 Paddock Wood,**
**Prudhoe**
**Northumberland,**
**NE42 5BJ (GB)**
Erfinder: **Huber, Hans F., Dr.**
**Im Korresgarten 68**
**D-5204 Lohmar (DE)**
Erfinder: **Müller, Hartmut, Dr.**
**34 Windsor Drive**
**Little Silver, NJ 07739 (US)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Selbstklebende Etiketten aus einer mit Haftklebstoff beschichteten Trägerbahn bestehen gewöhnlich aus Laminaten von

1. einer Folienbahn als bedruckbare Trägerbahn bzw. Sichtbahn, dit mit einem Haftklebstoff beschichtet ist und

2. einer Trennbahn bzw. Schutzschicht für den Klebstoff, die mit einem Stoff niedriger Oberflächenspannung, z. B. einem Silikon, beschichtet ist und eine glatte Ablösung des Etiketts zur Zeit und am Ort der Anwendung gestattet.

Solche Laminate werden in großen Rollen hergestellt und anschließend zu Rollen geringerer Breite oder zu Blättern geeigneter Größe zugeschnitten. Die Laminate werden dann bedruckt und der gewünschte Umriß der aus der Trägerbahn entstehenden einzelnen Etiketten durch Stanzen erzielt, wobei nur die Trägerbahn, nicht aber die Trennbahn geschnitten wird. Das überflüssige Material der Trägerbahn zwischen den Etiketten wird sodann von der Trennbahn als Netz abgezogen und verworfen. Die resultierende Rolle, bestehend aus der Trennbahn und darauf haftenden einzelnen Etiketten, wird geeigneten Maschinen zugeführt und die Etiketten mit hoher Geschwindigkeit auf die durch die Etiketten zu bezeichnenden Gegenstände aufgebracht.

Nur bei Etiketten für geringe Ansprüche besteht die Trägerbahn aus preisgünstigem Papier.

Als Trägerbahn dienen daher auch Metallfolien oder Folien aus thermoplastischen Polymeren, die aber auch noch Mängel bezüglich der Verarbeitbarkeit und/oder der Beständigkeit besitzen. Filme aus dem häufig verwendeten Weich-Polyvinylchlorid enthalten bis zu 20 Gew.-% monomere Weichmacher und sind schwer bedruckbar, schrumpfen durch Alterung und verändern wichtige Eigenschaften durch Wechselwirkung des Haftklebstoffes mit dem Weichmacher. Polyolefine, wie Polyethylen oder Polypropylen, sind ebenfalls schwer bedruckbar. Zelluloseacetat ist gegen den Einfluß von Feuchtigkeit nicht beständig und hat geringe Dimensionsstabilität. Polystyrol ist unzulänglich bearbeitbar und hat geringe Resistenz gegen Lösungsmittel. Polyethylenterephthalat hat Nachteile bezüglich der Bedruckbarkeit und ist wegen seiner Steifigkeit nicht genügend anpassungsfähig an andere als flache oder zylindrische Flächen.

Es wurde daher bereits vorgeschlagen, Trägerbahnen von z. B. selbstklebenden Etiketten aus strahlenhärtbaren Polymeren herzustellen (US-Patente 4 008 115, 4 022 926, 4 219 596 und 4 253 899). Solche strahlenhärtbaren Polymeren führen jedoch zu hochvernetzten Filmen, die deswegen schlecht bedruckbar sind, eine zu hohe Steifigkeit aufweisen und häufig spröde sind. Zimmermann US-A-4.818.610 und EP-A-0 305 161 verwendet andere Acrylat-Polymere.

Es bestand daher die Aufgabe, besonders für die Herstellung von bedruckbaren Trägerbahnen eine Folienbahn zur Verfügung zu stellen, die flexibel ist, ein gutes Aussehen besitzt, gut bedruckbar ist, bei maschineller Aufbringung an jede Form der zu etikettierenden Gegenstände anpaßbar ist und besonders gute Beständigkeit gegen Verschmutzung, Wasser, Reinigungsmittel, Lösungsmittel, Licht o. dgl. besitzt.

Weiter bestand ganz allgemein die Aufgabe, eine Folienbahn herzustellen, die diese guten Eigenschaften vereint und daher für zahlreiche Verwendungszwecke eine überlegene Eignung besitzt.

Nun war bekannt, nämlich von uns früher gefunden worden, daß bestimmte Copolyester nach der Acrylierung Haftklebstoffe ergeben.

Diese strahlenvernetzten Copolyester nach EP-A-0 207 257 sind überlegene Haftklebstoffe wegen hoher Dauerklebrigkeit und überlegener Haftkraft.

Folienbahnen hingegen, soweit geeignet als Trägerbahnen für Haftklebstoffe, dürfen keine Klebrigkeit aufweisen und müssen in Laminaten für die Herstellung von Etiketten sogar die Eigenschaft der "Blockfreiheit" besitzen, d.h. bei Ausübung von Druck und erhöhter Temperatur nicht verkleben.

Es war daher vorauszusetzen, daß sich die Eigenschaften eines Haftklebstoffes und die Eigenschaften einer Folienbahn, welche sich als Trägerbahn für den Haftklebstoff eignet, gegenseitig ausschließen. Acrylierte Copolyester sollten daher als Folienbahnen vollständig ungeeignet sein, wenn die Eigenschaft der Nichtklebrigkeit und "Blockfreiheit" gefordert wird.

Es wurde jedoch überraschend gefunden, daß ganz bestimmte Zusammensetzungen von acrylierten Copolyestern durchaus geeignet sind für die Herstellung von Folienbahnen, sofern nur bestimmte Bedingungen eingehalten werden.

Gegenstand der Erfindung sind daher strahlenvernetzte Folienbahnen mit besonderer Eignung als Trägerbahnen von Klebstoffschichten, deren Verwendung als klebstoffbeschichtete Trägerbahnen und ein Verfahren zur Herstellung dieser Folienbahnen, besonders soweit verfahrensgemäß Folienbahnen und ein Haftklebstoff gemeinsam durch Strahlen vernetzt werden.

Gegenstand der Erfindung ist eine strahlengehärtete Folienbahn, bestehend aus Copolyestern mit Hydroxyl-Endgruppen und einem bis auf 10 Mol % bezogen auf 100 Mol % aller Polyesterbestandteile limitierten Gehalt von mehr als zweifunktionellen Polyesterbestandteilen in der Copolyester-Kette oder Mischungen von solchen Copolyestern, worin die Glasübergangstemperaturen zwischen - 30 und + 30 °C und die mittleren Molekulargewichte der Copolyester zwischen 1 000 und 10 000 liegen, deren Hydroxyl-Endgruppen mit Acrylatverbindungen oder Methacrylatverbindungen umgesetzt sind, wobei nicht mehr als 90 % der Hydroxyl-Endgruppen zu Acrylatgruppen umgesetzt sind, die bei einem bestimmten optimalen Acrylierungsgrad die besten Eigenschaften, besonders Nichtklebrigkeit und Blockfreiheit aufweisen und besondere Eignung als Trägerbahn für Etiketten und Basis für Klebebänder mit einseitiger oder beidseitiger Haftklebstoffbeschichtung besitzen, besonders für Klebebänder, bei denen keine Delaminierung, d. h. kein Reißen zwischen Trägerfolie und Haftklebschicht, auftritt.

Es wurde nämlich gefunden, daß klebfreie und nicht blockende Folienbahnen erhalten werden, wenn die Bedingungen der empirischen Formel des Patentanspruchs eingehalten sind, d. h. daß mit einer variierenden Bandbreite von ± 10 % der optimale Acrylierungsgrad $A_{opt}$ eingehalten ist.

Für die Hersteller von Etiketten haben die Folienbahnen den besonderen Vorteil, daß die Folienbahn auf einer geeigneten Unterlage durch flächige Ausbringung der strahlenhärtbaren acrylierten Copolyester vom Hersteller der Etiketten hergestellt werden kann. Selbstverständlich ist auch getrennte Herstellung und Lieferung der Folienbahn als strahlengehärtete Trägerbahn möglich.

Besondere Vorteile ergeben sich jedoch, daß der Hersteller von Etiketten mit derselben technischen Ausrüstung, insbesondere der Ausrüstung für Streichtechniken für die Herstellung von Kleberschichten, auch die Folienbahn als Trägerbahn der Kleberschicht herstellen kann. Hierbei ist der Klebstoff insbesondere ein Haftklebstoff. Die Trägerbahn kann gleichzeitig als Druckträgerbahn benutzt werden, wobei auch vorteilhaft strahlenhärtbare Druckfarben verwendbar sind. Es ist dann möglich, in einem einzigen Arbeitsgang durch Strahlenhärtung die Trägerbahn, die Haftklebstoffschicht und erforderlichenfalls die Druckfarben durch Strahlung zu härten.

Zur Herstellung solcher Trägerbahnen werden die acrylierten Copolyester flüssig oder bei Erfordernis nach Aufschmelzen bei niedrigen Temperaturen verarbeitet.

Soweit höhere Schmelztemperaturen der Copolyester für eine Anzahl von Zwecken zu bevorzugen sind, soll die Schmelztemperatur mindestens 30 und sehr bevorzugt 40 °C betragen. Dadurch ist z.B. nach Aufschmelzen des acrylierten Copolyesters eine Verarbeitung im Bereich von beispielsweise 50 bis 150 °C durch Gießmaschinen, mit Extrudern, mit Schlitzdüsen oder Walzauftragswerken möglich und geeignet.

Die gestellte Aufgabe wird insbesondere dadurch gelöst, daß die strahlengehärtete und vernetzte Folienbahn eine begrenzte, vergleichsweise niedrige Vernetzungsdichte, aber einen hohen Vernetzungsgrad, d.h. hohen Gelgehalt aufweist. Die vergleichsweise niedrige Vernetzungsdichte entspricht einer vergleichsweise geringen Zahl von Acrylatgruppen je Makromolekül. Eine vergleichsweise niedrigere Zahl von Acrylatgruppen je Makromolekül wird durch mehrere Maßnahmen erreicht, nämlich durch Auswahl der Copolyester eines Molekulargewichts zwischen 1 000 und 10 000, vorzugsweise zwischen 2 000 und 5 000, wodurch Polyesterketten von 1 000 bis 10 000 bzw. vorzugsweise 2 000 bis 5 000 zwischen den durch die Acrylatgruppen gebildeten Vernetzungsstellen enthalten sind. Weiterhin ist die Menge der Hydroxyl-Endgruppen der Copolyester vorzugsweise dadurch begrenzt, daß die Hydroxylzahlen zwischen 20 bis 100, vorzugsweise 35 bis 90 liegen sollen. Dadurch ist auch die maximale Anzahl der Acrylatgruppen nach der Acrylierung begrenzt, wobei die Acrylierung ohnehin maximal nur bis zu einem Acrylierungsgrad von etwa 90 ausführbar ist. Es ist jedoch vorgesehen, darüber hinaus bewußt Hydroxyl-Endgruppen zu erhalten und die Hydroxyl-Endgruppen zu 40 bis 90 % mit Acrylatverbindungen umzusetzen. Weiterhin trägt bei, daß die Copolyester eine limitierte Verzweigung der Copolyesterketten aufweisen, dadurch, daß eine limitierte Menge von mehr als zweifunktionellen Copolyester-Bestandteilen, d. h. trifunktionelle oder ggf. tetrafunktionelle Verbindungen wie Triole oder Tetraole bzw. Tricarbonsäuren oder Tetracarbonsäuren enthalten ist.

Es müssen als Copolyester-Bausteine 1 bis 10 Mol-%, vorzugsweise 1,5 bis 9 Mol-%, sehr bevorzugt jedoch 1,5 bis 4 Mol-%, bezogen auf alle Polyester-Bausteine = 100 Mol-%, von mehr als zweifunktionellen Bestandteilen enthalten sein. Durch mehr als zweifunktionelle Polyesterbestandteile treten Kettenverzweigungen auf, und die Hydroxylzahl erreicht nicht das Minimum, das bei linearen Copolyestern und deren Aufbau aus lediglich zweifunktionellenBestandteilen erreicht wird. Andererseits ist die Hydroxylzahl durch die Menge der mehr als zweifunktionellen Bestandteile begrenzt, und es entstehen Copolyester-Ketten des genannten Molekulargewichts.

Die Copolyester sollen eine bestimmte Zusammensetzung der Copolyester bildenden Bestandteile besitzen, nämlich zwei verschiedene Dicarbonsäuren enthalten, von denen mindestens eine aus der Gruppe der aromatischen Dicarbonsäuren, Terephthal-, Isophthal- oder Phthalsäure in Mengen von mindestens 25 Mol-%, vorzugsweise mindestens 35 Mol-% aller enthaltenen Säuren, stammt. Soweit als trifunktionelle Säure Trimellitsäure enthalten ist, ist diese den aromatischen Carbonsäuren zuzurechnen. Die übrigen Dicarbonsäuren können aliphatische oder aromatische Dicarbonsäuren sein. Die Diole können sich aus einem oder vorzugsweise mehreren aliphatischen Diolen zusammensetzen, wobei auch Etherdiole, wie Diethylenglykol bzw. Triethylenglykol, enthalten sein können.

Durch eine Überschuß von Diolen im Kondensationsansatz der Polyester, die zusammen mit dem gebildeten Wasser bei der Polykondensation wieder entfernt werden, entstehen Hydroxyl-Copolyester, deren Endgruppen ganz überwiegend OH-Gruppen sind. Die OH-Zahlen sollen bei 20 bis 100, vorzugsweise 35 bis 85 liegen. Die Zahl der Carboxyl-Endgruppen ist gering. Die Carboxyzahl liegt unter 3,0; vorzugsweise zwischen 0,5 und 2,0.

Das Molgewicht soll zwischen 1 000 und 10 000, vorzugsweise 2 000 bis 5 000, d. h. im Bereich der echten Polymeren, liegen. Der Gehalt an niedrig-molekularen Bestandteilen unter M = 500 im Polyester soll möglichst gering sein.

Die Glastemperaturen der Copolyester liegen zwischen - 30 und + 30 °C, vorzugsweise zwischen - 20 und + 20 °C.

Die Umsetzung der Copolyester mit acrylat- bzw. Methacrylat-Verbindungen erfolgt mit einer limitierten Menge der Acrylate, so daß nicht mehr als etwa 90 %, vorzugsweise 50 bis 83 %, der OH-Gruppen des Copolyesters durch Acrylat-Endgruppen ersetzt werden. Dabei folgt der optimale Acrylierungsgrad der empirischen Formel

$$A_{opt} = 50 + x - y.$$

Der optimale Acrylierungsgrad ist,wie der Acrylierungsgrad allgemein,in Prozent der durch Acrylatgruppen umgesetzten Hydroxylgruppen der Copolyester definiert.

Der numerische Wert x berechnet sich aus der Differenz von 298 minus dem Wert für die Glasübergangstemperatur Tg des Copolyesters in °K.

Der numerische Wert y ist der Gehalt an mehr als zweifunktionellen Komponenten, berechnet als trifunktionelle Komponenten, in Molprozent, bezogen auf alle Polyesterbestandteile aus Polyolen und Polycarbonsäuren = 100 Mol-%, multipliziert mit 2.

In den Tabellen der Beispiele ist der Tg des Copolyesters in °C sowie der Wert y als Gehalt von Trimethylolpropan (TMP) angegeben.

Soweit sich in der empirischen Formel bei niedrigen Glasübergangstemperaturen rechnerisch höhere optimale Acrylierungsgrade als 90 oder 95 errechnen, ist zu verstehen, daß dann die maximal mögliche Acrylierung gewählt wird bzw. ein kleiner Zusatz an monomeren Acrylatverbindungen nützlich ist.

Diese Acrylierung mit Acrylat-Verbindungen oder Methacrylat-Verbindungen kann in entsprechender Weise erfolgen, wie in der EP-A 0 207 257 für die dortigen anderen Copolyester mit Alkylseitenketten angegeben. Vorzugsweise erfolgt die Acrylierung der Hydroxy-Copolyester mit einem aliphatischen oder ggf. aromatischen Diisocyanat und einem Hydroxyalkylacrylat, wobei aliphatische Di-isocyanate und Hydroxyethylacrylat bevorzugt sind. Beide Stoffe können nacheinander mit dem Polyester umgesetzt werden. Es ist jedoch bevorzugt, zunächst das Isocyanat mit dem Hydroxyalkylacrylat im Molverhältnis 1 : 1 bis 1 : 1,3 d.h. mit einem kleinen Überschuß des Acrylats, miteinander zu einem Addukt umzusetzen und darauf die Umsetzung mit dem Copolyester vorzunehmen.

Den acrylierten Copolyestern werden bevorzugt keine ungesättigte Verbindungen mit Molgewichten unter 500 wie niedermolekulare Acrylatverbindungen, d. h. sogenannte Reaktivverdünner wie Hexandioldiacrylat oder Trimethylol-triacrylat zugesetzt.

Die Glastemperatur der Copolyester bleibt nach der Acrylierung im wesentlichen erhalten und erhöht sich nur geringfügig um etwa 5 bis 10 °C.

Die Viskosität $V_{100}$ der acrylierten Copolyester soll zwischen 5 und 200 Pa.s liegen, so daß vor der Aushärtung eine Ausbringung als viskose Flüssigkeit nach Erwärmung möglich ist. In ausgehärtetem Zustand soll der Gel-Gehalt der Trägerschicht 50 bis 90 % betragen, wobei der Gel-Gehalt durch Extraktion mit einem guten Lösemittel wie Methylethylketon, Ethylacetat, Methylenchlorid o. dgl. bestimmt wird. Das Material der Folienbahn ist weiter durch eine Vernetzungsdichte entsprechend einem Acryl-Äquivalentgewicht von 1 000 bis 5 000, vorzugsweise 1 000 bis 3 000, gekennzeichnet. Außerdem sind die Folienbahnen durch eine Oberflächenspannung über 40 mN/m charakterisiert.

Die Herstellung der Folien- bzw. Trägerbahnen erfolgt bei Temperaturen von 50 bis 150 °C, wodurch die Viskosität in den Bereich der Verarbeitbarkeit mit üblichen flächigen Auftragstechniken abgesenkt wird. Die Aufbringung erfolgt auf einen Träger bzw. eine Folie, die nach Herstellung der Folienbahn bzw. der zusätzlichen Aufbringung der Klebstoffschicht entfernt wird.

Die Klebstoffschicht kann eine an sich beliebige Klebstoffschicht sein, wobei Haftklebstoffe bevorzugt aufgebracht werden. Sehr bevorzugt sind Haftklebstoffe, die als Makromere in der EP-A 0 207 257 beschrieben sind.

Beispiele

Herstellung der Copolyester PES 1 bis PES 7

Zur Herstellung der Polyester PES 1 bis PES 7 werden Ausgangsstoffe sowie ein für die Polykondensation erforderlicher Überschuß von Ethylenglykol (MEG), der während der Kondensation wieder entfernt wird, vermischt und wie im folgenden für PES 1 angegeben, umgesetzt.

Im Falle des PES 1 werden 9,57 kg Monoethylenglykol, 34,77 kg Neopentylglykol, 3,45 kg Trimethylolpropan, 26,00 kg Adipinsäure, 22,17 kg Isophthalsäure und 22,17 kg Terephthalsäure unter Zugabe von 50 g Octylenglykoltitanat als Katalysator unter Schutzgas auf 155 °C rasch erwärmt, worauf die Wasserabspaltung einsetzt. Die Temperatur des Reaktionsgemisches wird in 8 Stunden auf 250 °C gesteigert. Die Kopftemperatur am aufgesetzten Kühler beträgt 102 bis 104 °C.

Wenn die abgespaltene Wassermenge von 15,96 kg erreicht ist und 2,17 kg überschüssiges Diol abdestilliert sind, sinkt die Temperatur im Kühler auf 85 °C. Zur Kondensation wird innerhalb von 3 1/2 Stunden bei 250 °C der Druck von 1 010 auf 200 mbar gesenkt. Sobald die Säurezahl auf 3 oder weniger sinkt, ist die Kondensation beendet.

Die Polyester 2 bis 7 werden in entsprechender Weise mit den Mengen der Ausgangsstoffe, die den Molprozent-Angaben nach Tabelle I entsprechen, erhalten.

Tabelle I

Zusammensetzung der Polyester

| Polyester | PSA | IPS Mol-% | TPS | AD/DDS | MEG Mol-% ***) | NGP | HD | TMP | TG °C | Schmelz-punkt °C | Oll-Zahl |
|---|---|---|---|---|---|---|---|---|---|---|---|
| PES 1 | - | 30 **) | 30 | 40 AD | 30 | 65 | - | 5 | 0 | 45 | 68 |
| PES 2 | 33,3 | 66,7 | - | - | 25 | 25 | 50 | 5 | 0 | 45 | 56 |
| PES 3 | 30 | 30 | - | 40 DDS | 20 | 45 | 30 | 5 | - 24 | a) | 65 |
| PES 4 | 30 | 30 | - | 40 AD | 20 | 45 | 30 | 5 | - 15 | a) | 62 |
| PES 5 | 35 | 30 | - | 35 AD | 15 | 30 | 50 | 5 | - 21 | a) | 62 |
| PES 6 | - | 30 | 20 | 50 AD | 20 | 65 | 10 | 5 | - 10 | 47 | 68 |
| PES 7 | - | 35 | 35 | 30 AD | - | 83 | - | 17 | + 17 | 68 | 90 |

**) alle Säuren zusammen 100 Mol-%

***) alle Polyole zusammen 100 Mol-%

PSA = Phthalsäureanhydrid
IPS = Isophthalsäure
TPS = Terephthalsäure
AD = Adipinsäure
DDS = Decandicarbonsäure

MEG = Monoethylenglykol
NGP = Neopentylglykol
HD = Hexandiol
TMP = Trimethylolpropan

a) ausgeprägter kalter Fluss

Acrylierung der Polyester

Zunächst werden Isophorondiisocyanat in Mengen von 61,4 kg und 2-Hydroxyethylacrylat in Mengen von 38,6 kg (Molverhältnis IPDI/HEA = 1 : 1,2) vermischt und für 2 Stunden auf 70 °C erwärmt. Es entsteht ein Addukt aus beiden Verbindungen.

Herstellung der acrylierten Polyester

Die acrylierten Polyester nach Tabelle II werden aus den Copolyestern PES 1 bis PES 7 gemäß Tabelle I durch Umsetzung mit dem obengenannten Addukt aus Isophorondiisocyanat und 2-Hydroxyethylacrylat unter Zugabe eines Fotoinitiators hergestellt. Die Menge des Addukts wird unter Zugrundelegung der OH-Zahl des jeweiligen Polyesters so berechnet, daß 50 %, 60 % oder 80 % der OH-Gruppen des Polyesters durch Acrylatgruppen ersetzt sind (bezeichnet als A 50, A 60 und A 80).

Zur Herstellung des acrylierten Copolyesters PES 1 A 80 werden 69 kg des Copolyesters PES 1 unter Rühren bei 100 bis 150 mbar auf 120 °C erwärmt. Anschließend werden 29 kg des obengenannten Addukts aus Isocyanat und Acrylat innerhalb 30 Minuten zugegeben und noch 1,5 Stunden im Vakuum bei 120 °C gerührt. Anschließend erfolgt die Zugabe von 2 kg Fotoinitiator.
Der NCO-Gehalt beträgt weniger als 0,2 %.

In entsprechender Weise werden die in Tabelle II genannten acrylierten Polyester mit dem Acrylierungsgrad A 50, A 60 und A 80 mit entsprechenden Mengen des Addukts, berechnet auf die jeweilige OH-Zahl des Polyesters, hergestellt.

**Tabelle II**          Aufbau und Eigenschaften der flüssigen acrylierten Polyester

| Acrylierte Polyester | Addukt | Menge, % | Tg, °C x | $V_{100}$, Pa.s xx | $V_{120}$, Pa.s xx |
|---|---|---|---|---|---|
| PES 1 - A 60 | IPDI / HEA 1 : 1.2 | 60 | 11 | 27 | 7 |
| PES 1 - A 80 | IPDI / HEA 1 : 1.2 | 80 | 12 | 32 | 8 |
| PES 2 - A 60 | - " - | 60 | 13 | 34 | 7,6 |
| PES 3 - A 80 | - " - | 80 | - 18 | 6 | 2 |
| PES 4 - A 60 | - " - | 60 | - 6 | 10 | 3 |
| PES 5 - A 60 | - " - | 60 | 13 | 9 | 3 |
| PES 6 - A 80 | - " - | 80 | 0 | 18 | 6 |
| PES 7 - A 50 | - " - | 50 | | 81 | 16 |
| PES 7 - A 60 | - " - | 60 | + 27 | 168 | 30 |

x nach DGC

xx nach Brookfield

EP 0 419 862 B1

Tabelle III

Eigenschaften der ausgehärteten, acrylierten Polyester

| Eigenschaft | PES 1-A 60 | PES 1-A 80 | PES 2-A 60 | PES 3-A 80 | PES 4-A 60 | PES 5-A 60 | PES 6-A 80 | PES 7-A 50 | PES 7-A 60 |
|---|---|---|---|---|---|---|---|---|---|
| Gelgehalt (%) | 82 | 90 | 77 | 94 | 87 | 88 | 93 | 88 | 92 |
| MEK-Test (DH) | 23 | 48 | 68 | 30 | 70 | 55 | 46 | 65 | 80 |
| Oberfl.spannung (mN/m) | 42 | 44 | 42 | 44 | 46 | 42 | 44 | 46 | 44 |
| Delaminierung | + | + | + | + | + | + | + | + | + |
| Blockfreiheit | + | + | + | + | + | + | + | + | + |
| Reißfestigkeit* (N/mm²) | 17 | 41 | 28 | 18 | 22 | 22 | 35 | 28 | 50 |
| Bruchdehnung*(%) | 100 | 25 | 10 | 100 | 130 | 130 | 90 | 0 | 0 |

*Zuggeschwindigkeit DIN 53455 300 mm/min

In Tabelle II sind der Acrylierungsgrad A, die Glasumwandlungstemperatur Tg und die Viskositäten bei 100 und 120 °C angegeben.

Die in Tabelle III angegebenen Eigenschaften bestimmen den Gebrauchswert der Folienbahn, besonders als Trägerbahn von Klebstoffschichten.

Der durch die Vernetzung erzielte Gel-Gehalt und der MEK-Test kennzeichnen die Lösungsmittelbeständigkeit. Der Gel-Gehalt wird an der ausgehärteten Trägerbahn durch Extraktion mit Ethylacetat

9

bestimmt. Werte zwischen 75 und 95 % kennzeichnen eine gute Festigkeit gegenüber üblichen Lösungsmitteln.

Der MEK-Test wird durch Doppelhübe (DH) eines Stoffballens, der mit Methylethylketon (MEK) befeuchtet ist, ausgeführt. Ausreichende Werte liegen über 20, gute Werte über 30 Doppelhüben. Demgegenüber lösen sich Trägerbahnen von Etiketten aus einem Polystyrolfilm bereits nach weniger als 5 DH völlig auf.

Die Oberflächenspannung (gemessen durch Benetzung mit Flüssigkeiten von bekannter Oberflächenspannung) soll wenigstens 40 mN/m betragen, wenn eine gute Bedruckbarkeit erzielt werden soll. Die Oberflächenspannung ist im wesentlichen durch das Polymermaterial gegeben, beispielsweise liegen Polyolefine oder Polystyrol unter 35 mN/m und erfordern eine Corona-Behandlung vor der Bedruckung.

Die Delaminierung wird an fertigen Etiketten oder an Streifen der mit Kleberschicht beschichteten Trägerbahnen durch Aufbringen auf verschiedene Substrate wie Glas, Kunststoff, Keramik oder Metall geprüft, wobei das Plus-Zeichen in Tabelle III keine Delaminierung bedeutet. Haftklebstoffe mit hoher Schälkraft können Delaminierung bewirken, z. B. auf glatten Substraten wie Glas, wodurch bei Abziehen des Etiketts der Haftklebstoff auf dem Glas verbleibt und sich von der Trägerbahn löst. Bei Verwendung von Haftklebstoffen mit konstanter Schälkraft ist daher die Delaminierung ein Eignungstest für das Material der Trägerbahn; beispielsweise tritt Delaminierung bei Trägermaterial aus Polyethylenterephthalat häufig auf.

Blockfreiheit wird bei der Verwendung als Etiketten nach längerer Lagerung der Laminate als Rollenware aus Trägerbahnen mit Haftklebstoffschicht und Schutzschicht für den Klebstoff geprüft, wobei bei der Lagerung der Rollen Temperaturerhöhung oder Druckbeanspruchung möglich ist. Als Blockfreiheit wird bezeichnet, wenn eine einwandfreie Trennung der Laminatschichten von der übrigen Rolle mit der bei Etikettiermaschinen üblichen Abzugskraft möglich ist.

Reißfestigkeit und Bruchdehnung werden an Folien der Trägerbahnen als Qualitätsmerkmal für das Material der Trägerbahnen geprüft.

**Patentansprüche**

1. Strahlengehärtete Folienbahn, bestehend aus Copolyestern mit Hydroxyl-Endgruppen und einem auf bis zu 10 Mol-% bezogen auf 100 Mol % aller Polyesterbestandteile limitierten Gehalt von mehr als zweifunktionellen Polyesterbestandteilen in der Copolyester-Kette oder Mischungen von solchen Copolyestern, worin die Glasübergangstemperaturen zwischen -30 und +30°C und die mittleren Molekulargewichte der Copolyester zwischen 1 000 und 10 000 liegen, deren Hydroxyl-Endgruppen mit Acrylatverbindungen oder Methacrylatverbindungen umgesetzt sind, wobei nicht mehr als 90% der Hydroxyl-Endgruppen zu Acrylatgruppen umgesetzt sind, und worin der optimale Acrylierungsgrad der empirischen Formel

$$A_{opt} = 50 + x - y$$

gehorcht, worin

$A_{opt}$ der optimale Acrylierungsgrad in % der durch Acrylatgruppen umgesetzten Hydroxylgruppen der Copolyester,

x ein numerischer Wert der Differenz 298 minus Glasübergangstemperatur Tg des Copolyesters in °K, und

y der numerische Wert des Gehalts an mehr als zweifunktionellen Komponenten, berechnet als trifunktionelle Komponente, in Molprozent, bezogen auf alle Polyesterbestandteile = 100 Mol-%, multipliziert mit 2,

ist und der optimale Acrylierungsgrad mit einer Bandbreite von ± 10% eingehalten ist.

2. Folienbahn nach Anspruch 1, dadurch gekennzeichnet, daß die Schmelztemperatur des Polyesters über 30°C, bevorzugt über 40°C, liegt.

3. Folienbahn nach einem der Ansprüche 1 oder 2, dadurch gekennzeichnet, daß die limitierte Menge der trifunktionellen Polyesterbestandteile des Polyesters 1 bis 10 Mol-%, bezogen auf 100 Mol-% aller Polyesterbestandteile, beträgt.

4. Folienbahn nach mindestens einem der Ansprüche 1 bis 3, dadurch gekennzeichnet, daß in den Copolyestern die Menge der Hydroxyl-Endgruppen den Hydroxylzahlen von 20 bis 100, vorzugsweise 35 bis 85, entspricht.

**5.** Folienbahn nach mindestens einem der Ansprüche 1 bis 4, dadurch gekennzeichnet, daß 35 bis 90% der Hydroxyl-Endgruppen des Copolyesters mit Acrylatverbindungen oder Methacrylatverbindungen umgesetzt sind.

**6.** Folienbahn nach einem der vorangehenden Ansprüche, dadurch gekennzeichnet, daß die acrylierten Copolyester nicht mehr als 15, vorzugsweise weniger als 10 Gew.-%, ungesättigte Verbindungen mit Molgewichten unter 500 enthalten.

**7.** Folienbahn nach einem der vorangehenden Ansprüche für die Verwendung als Trägerbahn für einseitige oder beidseitige Kleberschichten.

**8.** Folienbahn nach Anspruch 7 als Trägerbahn für Schichten aus einem Haftklebstoff für die Herstellung von Etiketten.

**9.** Verwendung der Folienbahn nach einem oder mehreren der Ansprüche 1 bis 6 als Trägerbahn für einseitige oder beidseitige Kleberschichten von Klebebändern.

**10.** Verfahren zur Herstellung einer Folienbahn als Trägerbahn mit Klebstoffschicht gemäß mindestens einem der vorangehenden Ansprüche durch flächiges Ausbringen der mit (Meth)acrylatverbindungen umgesetzten Copolyester oder deren Mischungen bei erhöhter Temperatur mit derselben Technik wie das Aufbringen von Klebstoffschichten.

**11.** Verfahren zur Herstellung einer Trägerbahn mit Klebstoffschicht nach Anspruch 10, dadurch gekennzeichnet, daß das flächige Ausbringen der mit Methacrylatverbindungen umgesetzten Copolyester zur Trägerschicht und anschließend das Aufbringen der Kleberschicht auf die verfestigte Trägerbahn und darauf das gemeinsame Härten beider Schichten durch Bestrahlung erfolgt.

**Claims**

**1.** Radiation hardened foil web consisting of copolyesters having hydroxyl terminal groups and having a content of more than bifunctional polyester constituents in the copolyester chain, or in mixtures of such copolyesters limited to up to 10 Mol-% rated to 100 Mol-% of all polyester constituents, wherein the glass transition temperatures lie between -30 and + 30°C and the average molecular weights of the copolyesters lie between 1,000 and 10,000, in which copolyesters the hydroxyl terminal groups are reacted with acrylate compounds or methacrylate compounds, with not more than 90% of the hydroxyl terminal groups being converted to acrylate groups, and wherein the optimal degree of acrylation obeys the empirical formulae:-

$$A_{opt} = 50 + x - y$$

wherein:
$A_{opt}$     is the optimal degree of acrylation in % of the hydroxyl groups of the copolyester converted by means of acrylate groups,
x     is a numeral value of the difference of 298 minus glass transition temperature Tg of the copolyester in °K, and
y     is the numerical value of the content of more than bifunctional components calculated as trifunctional components, in Mol-%, related to all polyester constituents,
    = 100 Mol-% supplied by 2,
and the optimal degree of acrylation is kept within a band width of ± 10%.

**2.** Foil web according to claim 1, characterised in that the melting temperature of the polyester is above 30°C, preferably above 40°C.

**3.** Foil web according to one of claims 1 or 2, characterised in that the limiting amount of the trifunctional polyester constituent of the polyester amounts to 1 to 10 Mol-% related to 100 Mol-% of all polyester constituents.

**4.** Foil web according to at least one of claims 1 to 3, characterised in that, in the copolyesters, the amount of the hydroxyl end groups corresponds to the hydroxyl numbers of 20 to 100, preferably 35 to 85.

**5.** Foil web according to at least one of claims 1 to 4, characterised in that 35 to 90% of the hydroxyl end groups of the copolyester are reacted with acrylate compounds or methacrylate compounds.

**6.** Foil web according to any one of the foregoing claims, characterised in that the acrylated copolyesters do not contain more than 15, preferably less than 10% by weight, of unsaturated compounds with molecular weights below 500.

**7.** Foil web according to one of the foregoing claims for use as a support web for one sided or both sided adhesive coating.

**8.** Foil web according to claim 7 as support web for coatings formed of a contact adhesive for the production of labels.

**9.** Use of the foil web according to one or several of claims 1 to 6 as support web for one side or both sided adhesive coating of adhesive webs.

**10.** A process for the production of a foil web as support web with adhesive coating according to at least one of the foregoing claims by laminar production of the copolyester or mixtures thereof reacted with (meth) acrylate compounds at elevated temperature with the same technology as for the production of adhesive layers.

**11.** A process for the production of a support web with adhesive layer according to claim 10, characterised in that the laminar application of the copolyesters reacted with methacrylate compounds is carried out for the support layer, and then the application of the adhesive layer on the solidified support layer, and afterwards the combined hardening of both layers takes place by irradiation.

**Revendications**

**1.** Feuille continue durcie par l'action d'un rayonnement, cette feuille consistant en des copolyesters comportant des groupes hydroxyles terminaux présents en une teneur limitée jusqu'a une valeur de 10 modes %, (par rapport à 100 modes % des constituants polyesters), de constituants polyesters comportant plus de deux groupes fonctionnels dans la chaîne copolyester ou des mélanges de tels copolyesters, les températures de transition vitreuse se situant entre -30 et + 30°C et les poids moléculaires des copolyesters se situant entre 1000 et 10000, les groupes hydroxyles terminaux ayant réagi avec des acrylates ou des méthacrylates, pas plus de 90 % des groupes hydroxyles terminaux ayant réagi en donnant des groupes acrylates, et le degré optimal d'acrylation correspondant à la formule empirique :

$$A_{opt} = 50 + x - y$$

dans laquelle
$A_{opt}$  désigne le degré optimal d'acrylation, en % des groupes hydroxyles du copolyester qui ont réagi avec des groupes acrylates,
$x$  est une valeur numérique de la différence 298 moins la température de transition vitreuse Tv du copolyester, en degrés K, et
$y$  est la valeur numérique de la teneur en des composants comportant plus de deux groupes fonctionnels, valeur calculée dans le cas des composants trifonctionnels, en moles %, par rapport à tous les constituants polyesters = 100 moles %, multiplié par 2,
et le degré optimal d'acrylation étant maintenu avec une largeur de bande de ± 10 %.

**2.** Feuille continue selon la revendication 1, caractérisée en ce que la température de fusion du polyester est supérieure à 30°C et, de façon particulièrement préférée, supérieure à 40°C.

12

3. Feuille continue selon l'une des revendications 1 ou 2, caractérisée en ce que la quantité limitée des constituants polyesters trifonctionnels du polyester vaut 1 à 10 moles %, pourcentage rapporté à 100 moles % de tous les constituants polyesters.

4. Feuille continue selon l'une au moins des revendications 1 à 3, caractérisée en ce que, dans les copolyesters, la quantité des groupes hydroxyles terminaux correpond à des indices d'hydroxyle de 20 à 100, avantageusement de 35 à 85.

5. Feuille continue Selon l'une au moins des revendications 1 à 4, caractérisée en ce que 35 à 90 % des groupes hydroxyles terminaux du copolyester ont réagi avec des acrylates ou avec des méthacrylates.

6. Feuille continue selon l'une des revendications précédentes, caractérisée en ce que les copolyesters acrylés ne contiennent pas plus de 15 %, avantageusement moins de 10 % en poids, de composés insaturés ayant des poids molaires inférieurs à 500.

7. Feuille continue selon l'une des revendications précédentes, pour l'utilisation à titre de moyen de support pour des couches d'adhésif appliquées d'un côté ou sur les deux côtés.

8. Feuille continue selon la revendication 7, comme moyen de support pour des couches d'un adhésif pour la fabrication d'étiquettes.

9. Utilisation de la feuille continue selon une ou plusieurs des revendications 1 à 6, comme moyen de support pour des couches d'adhésif appliqué d'un côté ou sur les deux côtés de bandes adhésives.

10. Procédé de fabrication d'une feuille continue comme moyen de support comportant une couche d'adhésif, selon l'une au moins des revendications précédentes, par application sur une surface du copolyester ayant réagi avec des (méth) acrylates ou leurs mélanges à température élevée, par la même technique que l'application des couches d'adhésif.

11. Procédé de fabrication d'un moyen de support comportant une couche d'adhésif selon la revendication 10, caractérisé par l'application sur une surface du copolyester ayant réagi avec des méthacrylates pour former une couche de support, puis l'application de la couche d'adhésif sur le moyen de support renforcé et ensuite le durcissement en commun des deux couches, par exposition à un rayonnement.